# EUROPÄISCHE PATENTSCHRIFT

(11) **EP 3 837 062 B1**
(45) Veröffentlichungstag und Bekanntmachung des Hinweises auf die Patenterteilung: **09.03.2022**
(21) Anmeldenummer: 19731979.1
(22) Anmeldetag: 18.06.2019
(51) Int. Cl.: B08B 9/24, B65G 43/00

(54) **BEHÄLTERREINIGUNGSMASCHINE**
CONTAINER-CLEANING MACHINE
MACHINE POUR NETTOYER DES RÉCIPIENTS

(30) Priorität: 17.08.2018 DE 102018120081
(43) Veröffentlichungstag der Anmeldung: 23.06.2021
(73) Patentinhaber: KHS GmbH, 44143 Dortmund (DE)
(72) Erfinder: PREUSS, Ruediger, 44797 Bochum (DE); SMIESCHEK, Manfred, 41812 Erkelenz (DE); STOLLENWERK, Andre, 52072 Aachen (DE); KOWALEWSKI, Stefan, 52172 Roetgen (DE); HINRICHS, Timo, 52064 Aachen (DE)
(86) Internationale Anmeldenummer: PCT/EP2019/065978
(87) Internationale Veröffentlichungsnummer: WO 2020/035194

(56) Entgegenhaltungen:
- EP-A1- 0 632 283
- EP-A1- 2 383 208
- DE-A1- 10 245 323
- DE-A1- 19 542 673
- US-A1- 2007 056 379
- US-B1- 6 453 534
- US-B1- 6 507 789

## Beschreibung

Die vorliegende Erfindung betrifft eine Behälterreinigungsmaschine umfassend wenigstens eine umlaufende Endlos-Transportkette, die zueinander beabstandete Behälteraufnahmen trägt. Üblicherweise haben Behälterreinigungsmaschinen zwei parallel laufende Transportketten, zwischen denen jeweils die Behälteraufnahmen gehalten sind. Die Behälterreinigungsmaschine enthält weiterhin wenigstens eine Reinigungskammer, die von der Transportkette mit den Behälteraufnahmen durchlaufen wird. In der Reinigungskammer ist wenigstens eine Beaufschlagungsvorrichtung zum Beaufschlagen der in den Behälteraufnahmen gehaltenen Behältern mit einem Reinigungsmedium angeordnet. Die Transportkette steht mit wenigstens einem Antriebsmotor über ein Zahnrad in Antriebsverbindung. Üblicherweise sind die Transportketten ganz oder teilweise aus Metall sowie ein oder mehrere metallische Anteile umfassende Werkstoffe hergestellt, wobei Kunststoffanteil umfasst sein können, wie beispielsweise für Rollenauflagen, Rollendämpfungen, Lagerbuchsen oder sonstige Lagereinbauten. Sie sind in der Reinigungskammer sowohl aggressiven Reinigungsmedien als auch einer hohen Temperatur ausgesetzt und verschleißen daher über die Zeit. Die Transportgeschwindigkeit und damit die Laufgeschwindigkeit der Transportkette ist weiterhin bei derartigen Behälterreinigungsmaschinen sehr langsam. So dauert ein Zahneingriff in das Zahnrad vom Beginn des In- Eingriff-Tretens bis zum völligen Eingreifen und Einsinken des Kettenglieds in das Tal zwischen zwei Zähne des Zahnrads im Übergangsbereich etwa 2 bis 3 Sekunden.

Dokument US6453534B1 offenbart eine Flaschenreinigungsmaschine, wobei ein vom Antriebsmoment abhängiger Parameter gemessen wird.

Es ist Aufgabe der Erfindung, eine Behälterreinigungsmaschine zu schaffen, die Aussagen erlaubt über Defekte in der Transportkette und möglichst auch über Fehler in den allgemeinen Einstellungen der Transportkette, wie zum Beispiel Kettenführung.

Diese Aufgabe wird gelöst durch eine Behälterreinigungsmaschine mit den Merkmalen des Anspruchs 1. Diese Aufgabe wird bei einem Verfahren zum Betreiben einer Behälterreinigungsmaschine auch mit den Merkmalen des Anspruchs 13 gelöst. Vorteilhafte Weiterbildungen der Erfindung sind Gegenstand der zugeordneten abhängigen Ansprüche. Erfindungsgemäß hat die Behälterreinigungsmaschine eine Lastmesseinrichtung für den Antriebsmotor, deren Ausgangssignale einer Auswerteeinrichtung zugeführt sind. Die Auswerteeinrichtung ist konzipiert, den über die Lastmesseinrichtung gemessenen Lastverlauf des Antriebsmotors zumindest während eines Kettendurchlaufs, insbesondere kontinuierlich während des gesamten Betriebs, zu erfassen und auf den Lastwert eines einzelnen Kettenglieds aufzulösen. Das heißt, der Lastverlauf an dem Antriebsmotor wird zeitlich soweit aufgelöst, dass es möglich ist, den zeitlichen Verlauf zu erfassen, in welchem ein Zahn des Zahnrades mit einem neuen Kettenglied in Eingriff tritt. Beim Zusammenwirken eines Zahnrades mit einer Kette hat sich herausgestellt, dass zwar die Kraft von allen mit dem Zahnrad in Eingriff stehenden Kettengliedern übertragen wird, wobei jedoch das gerade neu mit dem Zahnrad in Eingriff tretende Kettenglied die Hauptlast an der Antriebsverbindung Zahnrad- Transportkette trägt. Diese Lastaufnahme durch ein neues Kettenglied vom Beginn des Eingriffs mit dem Zahnrad bis zum vollständigen Eingreifen und Einsinken in das Zahnrad geschieht in einem Übergangswinkel oder Übergangsbereich, welcher lediglich einen kleineren Sektor des gesamten Umschlingungswinkels der Transportkette auf dem Zahnrad ausmacht. Die Tatsache, dass das neu mit dem Zahnrad in Eingriff tretende Kettenglied einen erheblichen Anteil an der Lastübertragung zwischen Transportkette und Zahnrad hat, erlaubt es nun, den Status der Transportkette zu überwachen bzw. defekte Kettenglieder zu detektieren. Prinzipiell wertet die Auswerteeinrichtung das Lastverhalten jedes einzelnen Kettenglieds aus und detektiert ein Kettenglied dann als defekt, wenn sein Lastverhalten von einem Normverhalten abweicht. Hierfür gibt es mehrere Möglichkeiten.

So können z.B. in einer vorteilhaften Ausführungsform der Erfindung die maximalen oder mittleren Lastwerte der einzelnen Kettenglieder auf Abweichung von einer Norm beobachtet werden. Entsprechend weist die Auswerteeinrichtung eine Mittelwertschaltung auf, die konzipiert ist, die über mehrere Kettenglieder gemessenen Lastwerte zu einem Lastmittelwert zu mitteln, und welche Auswerteeinrichtung weiterhin konzipiert ist, ein Kettenglied als defekt zu detektieren, wenn dessen Lastwert vom Lastmittelwert um wenigstens einen Schwellwert abweicht. Der Schwellwert kann ein absoluter Wert sein oder auch ein relativer Wert, wie zum Beispiel 10% vom Lastmittelwert. Statt oder zusätzlich zur Mittelwertschaltung kann selbstverständlich auch in der Auswerteschaltung ein Referenzwertspeicher vorgesehen sein, in welchem der entsprechende Norm- oder Referenzwert abgespeichert ist, mit welchem die Lastwerte der einzelnen Kettenglieder dann verglichen werden.

Vorzugsweise ist die Mittelwertschaltung konzipiert, den Lastmittelwert über eine Anzahl von mindestens zehn Kettengliedern, insbesondere jedoch über die Anzahl aller Kettenglieder der Transportkette, zu mitteln. Auf diese Weise wird ein guter Bezugswert erhalten, um Lastabweichungen defekter Kettenglieder von dem Lastwert funktionierender Kettenglieder zu unterscheiden.

Vorzugsweise beträgt der Schwellwert zwischen 5 und 20%, insbesondere zwischen 10 und 20%, des Lastmittelwertes. Ein derartiger Schwellwert hat sich als wirkungsvoll herausgestellt, um ein defektes Kettenglied von einem funktionierenden Kettenglied zu unterscheiden.

Vorzugsweise hat die Auswerteeinrichtung einen Speicher für den Lastmittelwert über einen Kettendurchlauf und eine Vergleichsschaltung, die den gespeicherten Lastmittelwert mit einem aktuellen Lastmittelwert vergleicht, um daraus ein Wartungssignal abzuleiten.

In einer weiteren vorteilhaften Ausführungsform der Erfindung wird der Lastverlauf jedes einzelnen Kettenglieds untersucht. Dementsprechend hat die Auswerteeinrichtung eine Analyseschaltung, die konzipiert ist, den Lastverlauf beim In-Eingriff-Treten eines Kettenglieds mit dem Zahnrad über die Zeit vom Beginn des Eingriffs bis zum vollständigen Eingriff (d.h. im Übergangsbereich) zu erfassen, und welche Auswerteeinrichtung konzipiert ist, ein Kettenglied als defekt zu detektieren, wenn der Lastverlauf von einem Normverhalten abweicht. Bei einem funktionierenden Kettenglied ist z.B. der Lastverlauf, d.h. sein Lastaufnahmeverhalten im Übergangsbereich konstant. Wenn dies nicht der Fall ist, z.B. das Lastverhalten degressiv ist, deutet dies auf ein defektes Kettenglied hin.

Für die Lastaufnahme eines neuen Kettenglieds in das Zahnrad ist auch entscheidend, wie die geometrischen Verhältnisse der Kette insgesamt sind, das heißt wie die Kette dem Zahnrad zugeführt wird, als auch in welchem Zustand sich die einzelnen Kettenglieder befinden. Wenn zum Beispiel zwei benachbarte Kettenglieder aufgrund einer Abnutzung der Kette nicht mehr einwandfrei relativ zueinander drehen, sinkt das versteifte Kettenglied nicht mehr so gut in das Zahnrad ein und kann daher nicht so gut wie die anderen beweglichen Kettenglieder die Last von dem Zahnrad übernehmen. Das Gleiche trifft zu, wenn eine Kettenrolle abgenutzt ist, wenn die Kettenlaschen verbogen sind oder aufgrund einer Beschädigung der Kette die Querbalken und Laschen nicht mehr exakt in Längs- und Querrichtung zur Laufrichtung der Kette orientiert sind. Derartige Defekte wie eine Versteifung oder auch wie eine physikalische bzw. geometrische Änderung der einzelnen Komponenten der Kette führen somit zu einem veränderten Verhalten der Lastaufnahme des neu eingreifenden Kettengliedes, welches dadurch erfasst werden kann, dass sein Lastwert und/oder sein Lastverlauf beim Eingreifen in das Zahnrad von dem Lastwert bzw. Lastverlauf der anderen funktionierenden Kettenglieder abweicht. Diese Abweichungen werden beispielsweise in oben dargestellter Weise detektiert. Aufgrund der Detektion defekter Kettenglieder ist es somit möglich, diese Kettenglieder bei einer Wartung der Kette zuerst auszutauschen oder im Fall einer schweren Abnutzung sofort auszutauschen, was zu einer längeren Funktionsfähigkeit und zu einem geringeren Verschleiß der Kette insgesamt als auch der Zahnräder der Behälterreinigungsmaschine führt.

Vorteilhafterweise ist die Auswerteeinrichtung konzipiert, die Rotationsstellung des Antriebsmotors zu erfassen. Dies erlaubt zum einen eine optimale Zuordnung eines defekten Kettenglieds zur aktuellen Position auf dem Zahnrad. Zum anderen ist über die kontinuierliche Kenntnis der Rotationsstellung des Antriebsmotors auch die Position der Endlos-Transportkette jederzeit bekannt, da bekannt ist, wie viele Umdrehungen der Antriebsmotor für einen vollständigen Kettendurchlauf benötigt. Hierfür ist der Antriebsmotor vorzugsweise eine Servomotor. Alternativ oder zusätzlich kann auch eine physikalische Markierung an der Endloskette angebracht sein, die von einem Sensor gelesen und für die Bestimmung der Position der Endloskette und somit der einzelnen Kettenglieder ausgewertet wird.

Vorzugsweise ist die Auswerteeinrichtung weiterhin konzipiert, die Position des defekten Kettengliedes in der Transportkette zu bestimmen. Wenn zum Beispiel ein Kettenglied als defekt detektiert wird, weiß man, dass sich dieses Kettenglied gerade im Übernahmesektor des Zahnrades befindet, welcher sehr klein ist. Da die Antriebsmotoren in der Regel über Servomotoren gebildet sind und somit die Anzahl der Umdrehungen des Antriebsmotors erfasst werden kann, ist es somit möglich, über die Anzahl der Umdrehungen des Antriebsmotors seit Erfassung des detektierten defekten Kettengliedes die Position des defekten Kettengliedes in der Behälterreinigungsmaschine zu bestimmen. Auf diese Weise ist es zum Beispiel möglich, das defekte Kettenglied in einen Wartungsbereich der Behälterreinigungsmaschine zu fahren, in welchem ein Austausch des Kettengliedes möglich ist bzw. der gut von außen zugänglich ist.

Vorzugsweise enthält die Auswerteeinrichtung eine Korrelationsschaltung, die einen Speicher für die Anzahl der Motorumdrehungen aufweist, die für einen gesamten Kettendurchlauf benötigt werden, als auch einen Speicher für die aktuelle Position eines defekten Kettengliedes in der Transportkette vom Zeitpunkt der Erfassung des fehlerhaften Kettengliedes an. Auf diese Weise kann die exakte Position des Kettengliedes in der Behälterreinigungsmaschine errechnet werden. Der Zeitpunkt der Erfassung des fehlerhaften Kettengliedes wird dabei als die Position des Kettengliedes im Übernahmewinkel des Umschlingungswinkels der Kette betrachtet. Durch die Speicherung der Anzahl der Motorumdrehungen weiß man also, wie weit das defekte Kettenglied sich in Bewegungsrichtung der Transportkette von dem Übernahmewinkel auf dem Zahnrad weg bewegt hat.

Die Lastmesseinrichtung ist vorzugsweise konzipiert, das Drehmoment der Antriebsmaschine zu messen bzw. den der Antriebsmaschine zugeführten Strom zu messen. Dies ist zum Beispiel möglich über den Strom, den der Antriebsmotor von einem Frequenzwandler bezieht. Auf diese Weise kann der Lastverlauf an dem Zahnrad des Antriebsmotors über die gesamte Transportkette ermittelt werden und insbesondere durch die entsprechende Auflösung die Lastwerte aller einzelnen Kettenglieder der Transportkette.

Es ist bei den bestehenden Transportketten einer Behälterreinigungsmaschine üblich, dass die Transportkette über die Zeit verschleißt. Dies geht in der Regel mit einer Veränderung der Stromaufnahme beziehungsweise des Lastmittelwertes einher, wobei nachfolgend auch bei alleiniger Nennung von Lastmittelwert die Stromaufnahme analog mit verstanden werden soll, es sei denn dies schließt sich zwingend aus. Durch die Speicherung des Lastmittelwertes, zum Beispiel vom Einsetzen einer neuen Transportkette an, und den Vergleich mit einem aktuellen Lastmittelwert kann man daher sehen, wie stark sich der Lastmittelwert über die Zeit verändert hat, woraus man wiederum Rückschlüsse auf die Abnutzung der Transportkette ziehen kann. Man kann zum Beispiel dann aus dieser Änderung ein Wartungssignal ableiten, das dazu verwendet wird, eine Wartung bzw. einen Austausch der Kette herbeizuführen, zum Beispiel durch Übermittlung zu einem Wartungszentrum.

In einer vorteilhaften Weiterbildung der Erfindung hat die Behälterreinigungsmaschine einen Wartungsbereich und die Auswerteeinrichtung und die Antriebssteuerung sind konzipiert, den Antriebsmotor derart anzutreiben, dass das defekte Kettenglied in den Wartungsbereich gelangt. Auf diese Weise muss das defekte Kettenglied nicht gesucht werden, sondern es wird automatisch in den Wartungsbereich gefahren, zum Beispiel auf Anforderung, und kann dann in diesem Wartungsbereich leicht ausgetauscht werden.

In einer vorteilhaften Ausführungsform der Erfindung ist der Antriebsmotor ein von einem Frequenzwandler angetriebener Servomotor und die Lastmesseinrichtung ist konzipiert, den dem Antriebsmotor vom Frequenzwandler zugeführten Strom zu messen. Auf diese Weise ist die Erfassung des Drehmoments der Antriebsmaschine über den zugeführten Strom problemlos und mit einer hohen Auflösung möglich.

In einer vorteilhaften Ausführungsform der Erfindung hat die Behälterreinigungsmaschine zwei Transportketten, in welchem Fall es vorteilhafterweise möglich ist, die Behälteraufnahmen zwischen den beiden Transportketten anzuordnen und damit in klar definierter Weise durch die Behälterreinigungsmaschine zu führen.

Die Erfindung betrifft ebenfalls ein Verfahren zum Betreiben einer Behälterreinigungsmaschine, die wenigstens eine, vorzugsweise wenigstens zwei umlaufende Endlos-Transportketten mit zueinander beabstandeten Behälteraufnahmen und wenigstens eine Reinigungskammer aufweist, die von der Transportkette mit den Behälteraufnahmen durchlaufen wird. In der Reinigungskammer ist wenigstens eine Beaufschlagungsvorrichtung zum Beaufschlagen der in den Behälteraufnahmen gehaltenen Behältern mit einem Reinigungsmedium angeordnet.

Die Transportkette steht mit wenigstens einem Antriebsmotor über ein Zahnrad in Antriebsverbindung. Gemäß der Erfindung wird der Lastverlauf des Antriebsmotors beim Zusammenwirken der Transportkette mit dem Zahnrad über wenigstens einen Kettendurchlauf gemessen. Anschließend wird der Lastverlauf auf die Lastwerte der einzelnen Kettenglieder beim Eingreifen in das Zahnrad zeitlich aufgelöst. Ein Kettenglied wird dann als defekt detektiert wird, wenn sein Lastverhalten von einem Normverhalten abweicht. Die kann ein absoluter, z.B. maximaler Lastwert sein, der gemessen wird, wenn das entsprechende Kettenglied mit dem Zahnrad in Eingriff tritt oder auch ein zeitlicher Lastverlauf des Kettenglieds vom Beginn des In-Eingriff-Tretens bis zum vollständigen Eingriff und Einsinken des Kettenglieds in das Zahnrad, d.h. im Übergangsbereich.

So wird zum Einen aus den Lastwerten, insbesondere aus den maximalen Lastwerten mehrerer Kettenglieder ein Lastmittelwert gebildet wird, und ein Kettenglied als defekt detektiert, wenn sein Lastwert um mindestens einen Schwellwert vom Lastmittelwert abweicht. Dies stellt ab auf eine Erfassung von ein bis drei Lastwerten pro Kettenglied, vorzugsweise nur auf den maximalen Lastwert des Kettenglieds.

In dieser bevorzugten Ausführungsform wird also ein Kettenglied dann als defekt detektiert, wenn sein Lastwert um mindestens einen Schwellwert von dem Lastmittelwert abweicht. Erfasst werden hierbei die insbesondere die Lastspitzen, d.h. maximalen Lastwerte, die auftreten, wenn das Zahnrad mit einem neuen Kettenglied im Übergangsbereich in Eingriff tritt, wobei die Hauptantriebslast der Transportkette dann von dem neu eingreifenden Kettenglied in einem Übernahmewinkel erfasst wird. Der von der Auswerteeinrichtung aufgenommene Lastverlauf enthält daher eine Abfolge von kleinen Peaks, die jeweils mit dem Eingreifen eines neuen Kettengliedes korreliert sind. Diese Peaks können zur Bestimmung eines Lastmittelwerts über mehrere Kettenglieder, zum Beispiel über mindestens zehn Kettenglieder oder aber über mehr Kettenglieder, insbesondere die gesamte Transportkette, gemittelt werden, und dann werden die den einzelnen Kettengliedern zugeordneten Peaks auf ihre Abweichung von dem Mittelwert ausgewertet. Wenn diese Abweichung mindestens ein Schwellwert beträgt, zum Beispiel mindestens 10% des Lastmittelwertes, dann wird dieses Kettenglied als defekt detektiert. Alternativ oder zusätzlich zur obigen Bestimmung des Lastmittelwerts kann dieser alternativ oder zusätzlich auch als gespeicherter Referenzwert vorliegen. Der Vorteil des errechneten Mittelwerts liegt darin, dass er der aktuellen Gesamtabnutzung der Transportkette Rechnung trägt. Der Vorteil eines gespeicherten Referenzwertes als Lastmittelwert hingegen liegt darin, dass, insbesondere wenn der Referenzwert an der neuen Kette bestimmt wird, die Gesamtabnutzung der Kette mit erfasst wird.

Vorzugsweise wird der Lastmittelwert abgespeichert und ein aktueller Lastmittelwert wird mit dem (vorzugsweise bei der neuen Transportkette gemessenen) abgespeicherten Lastmittelwert verglichen, um eine Aussage über die Abnutzung der Kette zu erhalten. Mit dem Einbau einer neuen Kette wird vorzugsweise gleich ein Lastmittelwert ermittelt. Wenn dieser Lastmittelwert der neuen Transportkette gespeichert wird, kann der aktuelle Lastmittelwert des aktuellen Betriebstages mit diesem abgespeicherten Lastmittelwert der neuen Transportkette verglichen werden. Mit der Abnutzung der Kette verändert sich der Lastmittelwert und somit erlaubt die Änderung des aktuellen Lastmittelwertes zum abgespeicherten Lastmittelwert eine Aussage über die Abnutzung der Kette. Auf diese Weise kann rechtzeitig vor dem Ausfall der Transportkette eine Wartungsmaßnahme oder ein Austausch der Kette in die Wege geleitet werden.

In einer genaueren Analyse wird der Lastverlauf beim In-Eingriff-Treten eines Kettenglieds mit dem Zahnrad und zwar über zumindest einen Großteil, insbesondere über die gesamte Zeitspanne vom Beginn des Eingriffs bis zum vollständigen Eingriff erfasst. Ein Kettenglied als wird dann als defekt detektiert, wenn der Lastverlauf von einem Normverhalten abweicht. Üblicherweise ist der gemessene Lastverlauf eines Kettenglieds im Übernahmebereich konstant, entspricht über die Zeit aufgetragen somit einer horizontalen Gerade. Ein Fehler liegt vor, wenn der Lastverlauf nicht konstant ist, z.B. degressiv, d.h. über die Zeitspanne abnimmt oder auch nicht linear ist. Auch diese Analyse erlaubt somit die Bestimmung eines defekten Kettenglieds, auch wenn sein maximaler Lastwert im Normbereich liegt.

Vorzugsweise wird der Lastverlauf des Antriebsmotors beim Zusammenwirken der Transportkette zusammen mit der korrespondierenden Rotationsstellung des Antriebsmotors gemessen, was genaue Rückschlüsse auf die Position der Kettenglieder auf dem Zahnrad als auch in der Behälterreinigungsmaschine erlaubt.

Vorzugsweise wird die Position des defekten Kettengliedes in der Transportkette zur weiteren Veranlassung erfasst. Auf diese Weise ist es möglich, die aktuelle Position des defekten Kettengliedes in der Transportkette nachzuverfolgen. Wenn zum Beispiel mehrere Antriebsmotoren vorgesehen sind mit entsprechenden Zahnrädern, kann die detektierte Abweichung bei den anderen Antriebsmotoren verifiziert werden. Wenn diese zum Beispiel bei den anderen Antriebsmotoren nicht auftritt, kann es sich zum Beispiel bei dem gemessenen Defekt um einen Defekt des Zahnrades handeln.

Idealerweise ist die erfindungsgemäße Behälterreinigungsmaschine und das zugehörige Verfahren derart, dass der Lastverlauf des mindestens einen Antriebsmotors erfasst wird und auf den Lastwert und/oder Lastwertverlauf in einem Zeitintervall eines einzelnen Kettenglieds aufgelöst wird. Mittels der Auswerteeinrichtung wird dann für eine Mehrzahl von Kettengliedern und insbesondere für alle Kettenglieder oder Kettenabschnitte ein für das jeweilige Kettenglied oder den Kettenabschnitt charakteristischer Lastwert und/oder Lastverlauf bestimmt, wie eine Art digitaler Fingerabdruck, als typischer Kennwert, der diesem Kettenglied oder -abschnitt zugeordnet ist. Weil ich Kettenglieder an jedem Zahnrad jeweils etwas unterschiedlich verhalten, werden insbesondere für die Paare aus
■ einerseits Kettenglied und/oder -abschnitt und
■ andererseits Zahnrad bzw. Antriebseinheit
ein Satz ortsabhängiger Kennwert generiert. Unter Verwendung dieser Kennwerte, wobei hierunter auch ein Satz oder Gruppe aus Kennwerten verstanden werden soll, kann dann zu jeder Zeit die Position des jeweiligen Kettengliedes ganz unabhängig von einem Defekt in der Behälterbehandlungsmaschine bestimmt werden und ist natürlich für den Bediener auch geeignet nutz- oder darstellbar.

Die Erfassung der Position des Kettengliedes ermöglicht es auch, das defekte Kettenglied in eine Wartungsposition zu fahren, wo es dann gewartet oder ausgetauscht werden kann.

Die Position wird vorzugsweise bestimmt, indem die Anzahl der Antriebsmotorumdrehungen seit der Detektion des defekten Kettengliedes durch die Gesamtzahl der Antriebsmotorumdrehungen über einen gesamten Kettendurchlauf bestimmt wird. Auf diese Weise erhält man die lineare Position des defekten Kettengliedes von dem erfassten Übernahmewinkel des Zahnrades in Transportrichtung aus gesehen.

In einer vorteilhaften Weiterbildung des erfindungsgemäßen Verfahrens werden mehrere Antriebsmotoren verwendet und eine Lastmessung an wenigstens zwei der Antriebsmotoren durchgeführt. Die an den unterschiedlichen Antriebsmotoren gemessenen Lastwerte der zueinander korrelierenden Kettenglieder werden zueinander in Beziehung gesetzt, um die Existenz und/oder die Position eines defekten Kettengliedes zu verifizieren. Wenn zum Beispiel ein Kettenglied nur auf einem der Antriebsmotoren als defekt detektiert wird, kann dies darauf hinweisen, dass entweder an dem entsprechenden Zahnrad oder an der Kettenzuführung dieses Antriebsmotors etwas nicht in Ordnung ist.

Wenn zudem die Zahnräder der mehreren Antriebsmotoren unterschiedlich groß sind und somit die Kettenglieder unterschiedlich stark gegeneinander ausgelenkt werden, lassen sich weitere Informationen erhalten, die eine Aussage über die Beweglichkeit der Kettenglieder relativ zueinander erlauben.

Zudem ist es prinzipiell möglich, über die Lastwerte aufeinanderfolgender Kettenglieder Informationen über spezielle fehlerhafte Komponenten der Ketten zu erhalten. So kann zum Beispiel darauf geschlossen werden, dass, wenn der Lastwert jedes zweiten Kettenglieds von dem vorherigen in gleicher Weise abweicht, die Innen- oder Außenlaschen der Antriebskette fehlerhaft bzw. abgenutzt sind.

Es ist für den Fachmann offensichtlich, dass die oben beschriebenen Ausführungsformen sowohl der Behälterreinigungsmaschine als auch des Verfahrens miteinander kombiniert werden können, sofern dem technisch nichts entgegensteht.

Folgende Begriffe werden synonym verwendet: Kette - Transportkette - Endlos-transportkette; Übergangswinkel - Übergangsbereich;

Die Erfindung wird nachfolgend beispielsweise anhand der schematischen Zeichnungen beschrieben. In dieser zeigen:
- Fig. 1: eine Aufsicht auf eine Endlostransportkette in Eingriff mit einem Zahnrad der Antriebsmaschine einer Behälterreinigungsmaschine,
- Fig. 2: eine Aufsicht auf einen Übernahmewinkel eines Zahnrades mit der auflaufenden Transportkette,
- Fig. 3a: eine erste Darstellung eines fehlerhaften Kettengliedes im Übernahmewinkel,
- Fig. 3b: eine Aufsicht auf ein fehlerhaftes Kettenglied mit Innen- und Außenlaschen im Übernahmewinkel eines Zahnrades,
- Fig. 4: ein Diagramm des Drehmomentverlaufs des Antriebsmotors über mehrere Kettendurchläufe,
- Fig. 5: ein Diagramm mit den maximalen Drehmomenten jedes Kettengliedes bei einer Transportkette mit einer Gesamtzahl von 42 Kettengliedern entsprechend den mehreren Durchläufen aus Fig. 4,
- Fig. 6: ein Diagramm eines Drehmomentverlaufs beim Eingriff eines einzelnen funktionierenden Kettengliedes,
- Fig. 7: ein Diagramm gemäß Fig. 6 beim Eingriff eines defekten Kettenglieds und
- Fig. 8: eine zweiendige Behälterreinigungsmaschine in einer Gesamtansicht.

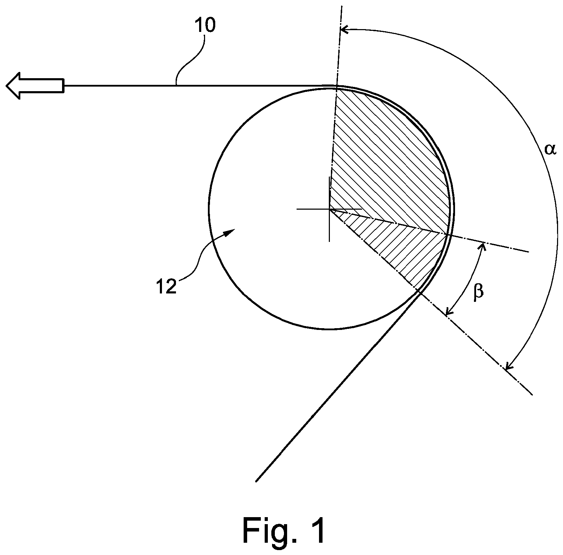

Fig. 1 zeigt eine Aufsicht auf eine Endlostransportkette 10 der Behälterreinigungsmaschine, die in einem Umschlingungswinkel α in einem Zahnrad 12 eingreift welches mit einem Antriebsmotor der Behälterreinigungsmaschine verbunden ist. In diesem Umschlingungswinkel α bezeichnet der Übernahmewinkel bzw. Übernahmebereich β den Sektor von dem Beginn des Eingreifens bis zum völligen Eingreifen und Einsinken eines neuen Kettengliedes zwischen die Zähne des Zahnrads 12. In diesem Bereich übt das neu eingreifende Kettenglied die höchste Übertragungskraft zwischen dem angetriebenen Zahnrad und der Transportkette 10 aus.

Die Transportkette 10 trägt zueinander beabstandete Behälteraufnahmen, mit denen Behälter, z.B. Flaschen durch wenigstens eine Reinigungskammer transportiert werden, in welcher die Behälter durch Beaufschlagungseinrichtungen mit einem Reinigungsmittel beaufschlagt werden.

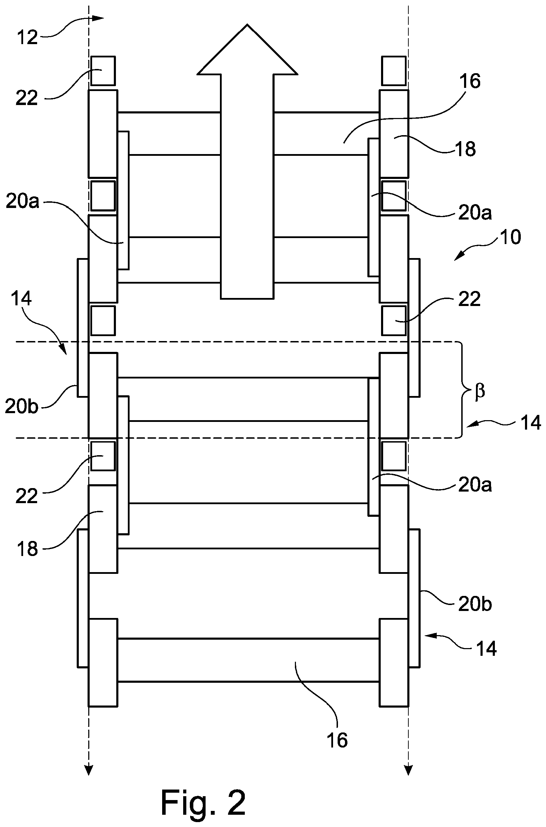

Fig. 2 zeigt die Aufsicht auf die Transportkette 10 in der Zahnradebene, welche aus eine Vielzahl mit einander verbundener Kettenglieder 14 besteht. Jedes Kettenglied 14 besteht aus einem Querbalken 16 mit zwei an dessen Enden befindlichen Kettenrollen 18 und zwei an den Querbalken befestigten Laschen 20, wobei zwei aufeinanderfolgende Kettenglieder 14 abwechselnd Innenlaschen 20a haben, welche an der Innenseite der Kettenrollen 18 angeordnet sind, und Außenlaschen 20b, die an der Außenseite der Kettenrollen 18 angeordnet sind. Die Darstellung zeigt das Zusammenwirken der Kettenglieder 14 mit den Zähnen 22 des Zahnrades 12 insbesondere im Übernahmewinkel β. Die Darstellung zeigt hierbei das Zusammenwirken zwischen den Zähnen 22 und den Kettenrollen 18 der Kettenglieder 14, wobei in diesem Übernahmewinkel und Übernahmebereich β die Kettenrollen gleichzeitig und gleichmäßig mit den Zähnen 22 des Zahnrads 12 in Eingriff kommen und entsprechend der Geometrie des Zahnrades in die Täler zwischen jeweils zwei Zähnen 22 des Zahnrads 12 eintaucht. Bei einem optimalen Zusammenspiel von Kettenglied 14 und Zähnen 22 des Zahnrades 12 sollte hierbei der Drehmomentverlauf während des In- Eingriff- Tretens im Übergangswinkel β möglichst konstant sein.

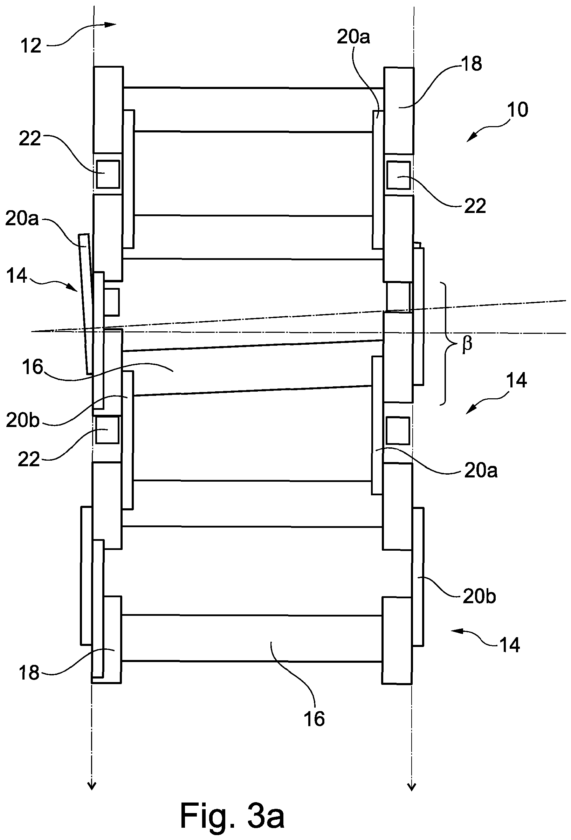

Fig. 3a zeigt eine Ansicht gemäß Fig. 2, wobei das Kettenglied 14a einen defekten nicht exakt quer verlaufenden Querbalken 16a. Hierdurch gelangt im Übernahmebereich β zuerst die linke Kettenrolle 18 auf das Zahnrad 22 und erst danach die rechte Kettenrolle 16. Hieraus ergibt sich ein nichtlinearer Verlauf der Drehmomentübertragung im Übergangsbereich β als auch ein veränderter Maximalwert des Drehmoments, der durch das Kettenglied 14 übertragen wird.

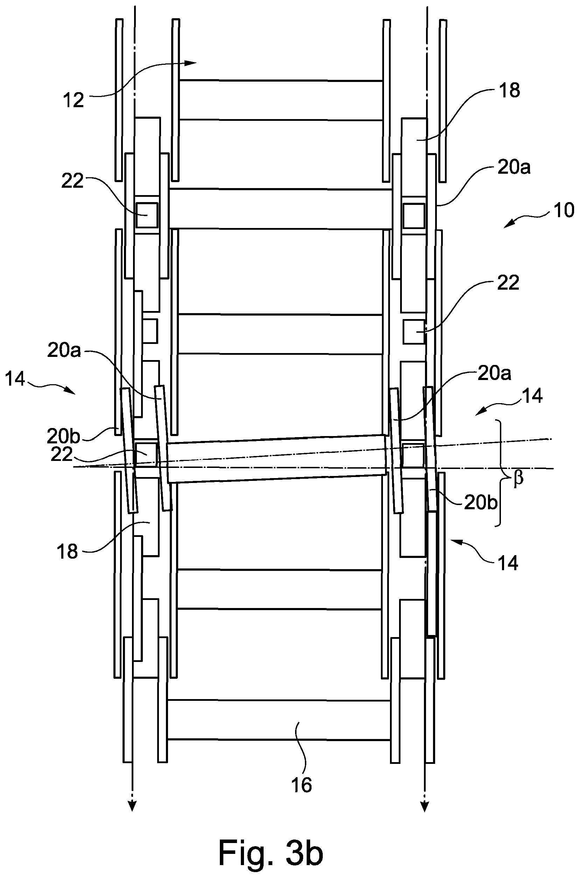

Fig. 3b zeigt eine Ansicht gemäß Fig. 3a, wobei hier eine Kette mit Doppellaschen 20a, 20b das heißt mit beidseitig der Kettenrollen 18 angeordneten Innenlaschen 20a und Außenlaschen 20b dargestellt ist.

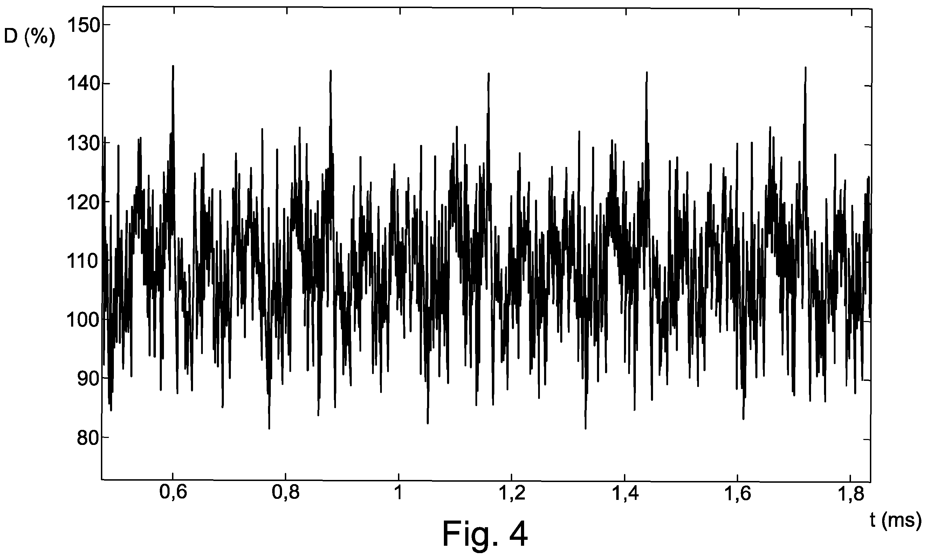

Fig. 4 zeigt ein Diagramm eines an der Antriebsmaschine gemessenen Drehmomentverlaufs. Dieser ist nicht in absoluten Zahlen wiedergegeben, sondern auf einen Referenzwert normiert. Die Auftragung erfolgt nach oben in %. Nach rechts ist die Zeit in ms aufgetragen, und zwar über eine Anzahl von etwa acht Kettendurchläufen.

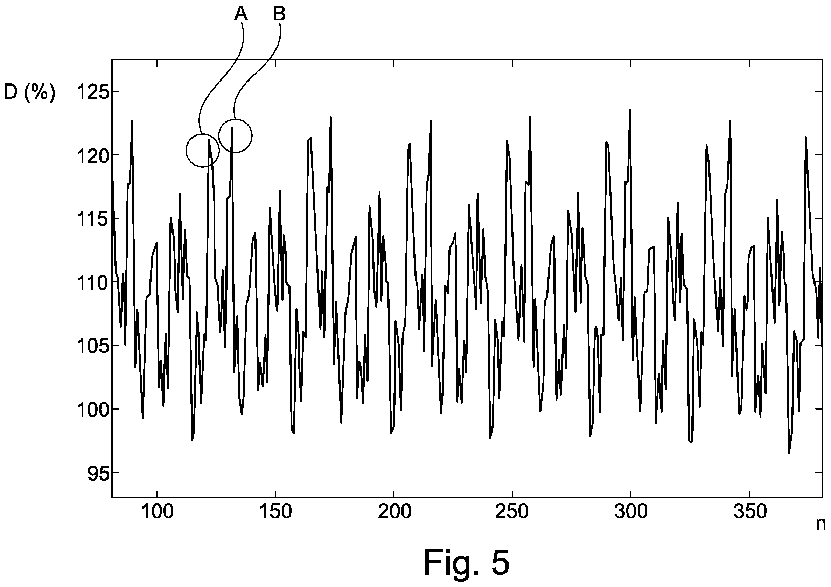

Fig. 5 stellt bereits eine Auswertung des obigen Drehmomentverlaufs gemäß Fig. 4 dar unter Berücksichtigung der Rotationsstellung des Antriebsmotors, so dass jedem einzelnen Kettenglied ein Maximaldrehmoment beim Eingriff in das Zahnrad zugeordnet werden konnte. Die Transportkette, die hier dargestellt ist, hat insgesamt 42 Kettenglieder. Nach oben ist das maximale normierte Drehmoment pro Zahneingriff in % aufgetragen, während nach rechts die Anzahl der Kettenglieder oder Zahneingriffe aufgetragen ist. Es sind somit insgesamt etwa acht Kettendurchläufe dargestellt. Aus dieser Aufzeichnung ist ersichtlich, dass der Maximalwert der Drehmomentübertragung pro Kettenglied an zwei Punkten A und B erheblich über dem maximalen Drehmoment der anderen Kettenglieder liegt. Man kann daher davon ausgehen, dass diese den Peaks A und B entsprechenden Kettenglieder fehlerhaft sind.

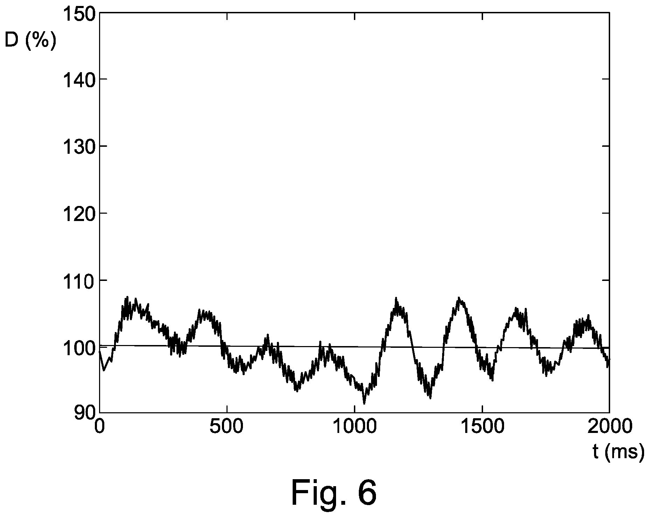

Während Fig. 5 eine Aufzeichnung des maximalen Drehmoments jedes einzelnen Kettengliedes über mehrere Kettendurchläufe zeigt, zeigt Fig. 6 das Drehmoment nach oben über die Eingriffszeit eines einzigen Kettenglieds, nämlich über 2000 ms.

Fig. 6 zeigt hierbei den Eingriff eines guten funktionierenden Kettenglieds, bei welchem die Drehmomentaufnahme im gesamten Übergangsbereich β in etwa horizontal linear ist.

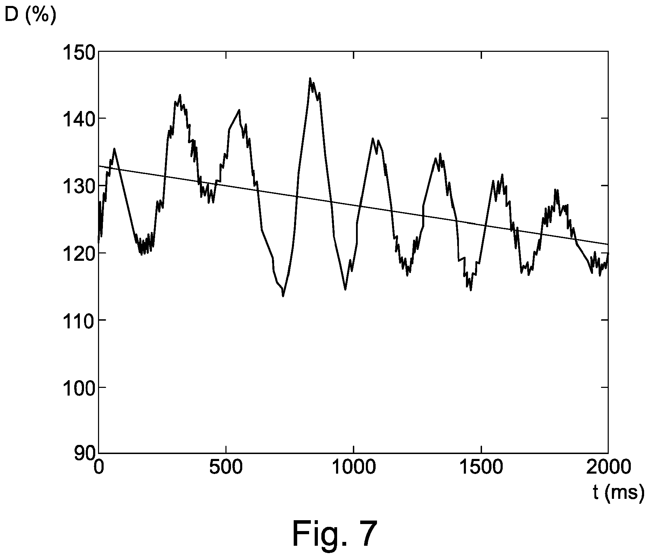

Fig. 7 zeigt dahingehend ein defektes Kettenglied, bei welchem die Drehmomentübertragung während eines Eingriffs nicht linear ist, sondern regressiv abfällt vom Beginn des Eingriffs zum Ende des Eingriffs.

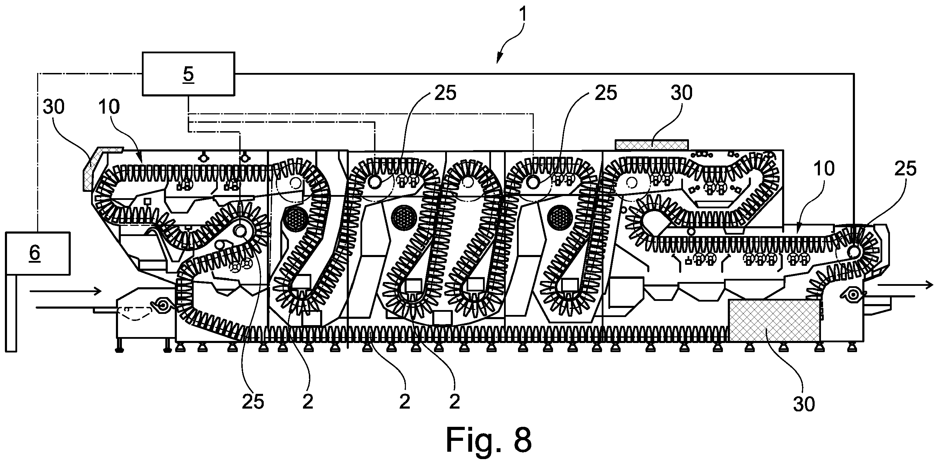

In Figur 8 ist eine Darstellung der Behälterreinigungsmaschine 1 als Gesamtmaschine in einer Seitenansicht gezeigt. Zwei parallele Transportketten 10 tragen und fördern eine Vielzahl von Behälterträgern 2. Wie vorstehend beschrieben, werden die Zustandsdaten mindestens eines Antriebsmotors, insb. die Leistungsaufnahme mehrerer Servomotoren 25 in der Auswerteeinrichtung 5 ausgewertet und jedes Kettenglied ist somit identifizierbar, insbesondere ein defektes Kettenglied. Der mindestens eine Servomotor 25, hier vorliegend sind vier Servomotoren 25 aufgewiesen, ist hierfür datenleitend mit der Auswerteeinrichtung 5 verbunden. Dieses einzelnen Kettenglied kann dann automatisiert oder über eine manuelle Eingabe am Bedienerpanel 6, welches gegebenenfalls eine Baueinheit mit der Auswerteeinrichtung 5 darstellen kann, zu einer definierten Position innerhalb der Behälterreinigungsmaschine 1 gefahren werden. Insbesondere wird ein zur Wartung oder Austausch vorgesehenes Kettenglied oder Kettenabschnitt in den Zugangsbereich der Wartungsöffnung 30 verfahren und dort angehalten. Die Wartungsöffnung 30 ist an gut zugänglichen Stellen der Behälterreinigungsmaschine 1 angeordnet und vorliegend an drei möglichen Positionen gezeigt, nämlich im unteren Bereich seitlich, auf dem Dach der Behälterreinigungsmaschine 1 und an der Frontseite im oberen Stirnseitenbereich.

Die ideale Lage der Wartungsöffnung 30 sollte eine maximale Zugänglichkeit für das Personal und/oder Nutzbarkeit von Hebe- und Transortaggregaten gewährleisten. Sie ist damit vorrangig von den jeweiligen räumlichen Gegebenheiten abhängig, unter welchen die Behälterreinigungsmaschine 1 aufgestellt wird.

Dies zeigt somit, dass man sowohl über die Maxima des Drehmoments pro Kettengliedeingriff als auch über den Verlauf des Drehmoments während eines Kettengliedeingriffs eine Aussage über funktionierende und defekte Kettenglieder erhält.

In Figur 8 ist eine Darstellung der Behälterreinigungsmaschine 1 als Gesamtmaschine in einer Seitenansicht gezeigt. Zwei parallele Transportketten 10 tragen und fördern eine Vielzahl von Behälterträgern 2. Wie vorstehend beschrieben, werden die Zustandsdaten mindestens eines Antriebsmotors, insb. die Strom- und/oder die Leistungsaufnahme mehrerer Servomotoren 25 in der Auswerteeinrichtung 5 ausgewertet und jedes Kettenglied ist somit identifizierbar, insbesondere ein defektes Kettenglied. Der mindestens eine Servomotor 25, hier vorliegend sind vier Servomotoren 25 aufgewiesen, ist hierfür datenleitend mit der Auswerteeinrichtung 5 verbunden. Dieses einzelnen Kettenglied kann dann automatisiert oder über eine manuelle Eingabe am Bedienerpanel 6, welches gegebenenfalls eine Baueinheit mit der Auswerteeinrichtung 5 darstellen kann, zu einer definierten Position innerhalb der Behälterreinigungsmaschine 1 gefahren werden. Insbesondere wird ein zur Wartung oder Austausch vorgesehenes Kettenglied oder Kettenabschnitt in den Zugangsbereich der Wartungsöffnung 30 verfahren und dort angehalten. Die Wartungsöffnung 30 ist an gut zugänglichen Stellen der Behälterreinigungsmaschine 1 angeordnet und vorliegend an drei möglichen Positionen gezeigt, nämlich im unteren Bereich seitlich, auf dem Dach der Behälterreinigungsmaschine 1 und an der Frontseite im oberen Stirnseitenbereich.

Die ideale Lage der Wartungsöffnung 30 sollte eine maximale Zugänglichkeit für das Personal und/oder Nutzbarkeit von Hebe- und Transortaggregaten gewährleisten. Sie ist damit vorrangig von den jeweiligen räumlichen Gegebenheiten abhängig, unter welchen die Behälterreinigungsmaschine 1 aufgestellt wird.

Die Anmeldung ist nicht auf das oben beschriebene Ausführungsbeispiel begrenzt, sondern kann innerhalb des Schutzbereichs der beiliegenden Ansprüche variiert werden.

### Bezugszeichenliste:

- 1: Behälterreinigungsmaschine
- 2: Behälterträger
- 5: Auswerteeinrichtung
- 6: Bedienerpanel

- 10: Transportkette, endlos und umlaufend
- 12: Zahnrad, mit dem Antriebsmotor der Behälterreinigungsmaschine verbunden
- 14: Kettenglied der Kette
- 16: Querbalken des Kettenglieds
- 18: Kettenrolle des Kettenglieds

- 20a: Innenlasche des Kettenglieds
- 20b: Außenlasche des Kettenglieds
- 22: Zahn des Zahnrads

- 25: Servomotor

- 30: Wartungsöffnung

- α: Umschlingungswinkel der Transportkette auf dem Zahnrad
- β: Übertragungswinkel vom Beginn bis zum vollständigen Eingreifen eines Kettenglieds in das Zahnrad

## Patentansprüche

1. Behälterreinigungsmaschine, umfassend wenigstens eine umlaufende Endlos-Transportkette (10), die zueinander beabstandete Behälteraufnahmen trägt, und wenigstens eine Reinigungskammer, die von der Transportkette (10) mit den Behälteraufnahmen durchlaufen wird, in welcher Reinigungskammer wenigstens eine Beaufschlagungsvorrichtung zum Beaufschlagen der in den Behälteraufnahmen gehaltenen Behältern mit einem Reinigungsmedium angeordnet ist, welche Transportkette (10) mit wenigstens einem Antriebsmotor über ein Zahnrad (12) in Antriebsverbindung steht, wobei
die Behälterreinigungsmaschine eine Lastmesseinrichtung für den Antriebsmotor aufweist, deren Ausgangssignale einer Auswerteeinrichtung (5) zugeführt sind, welche Auswerteeinrichtung (5) konzipiert ist, den über die Lastmesseinrichtung gemessenen Lastverlauf des Antriebsmotors zumindest während eines Kettendurchlaufs zu erfassen, **dadurch gekennzeichnet, dass** die Lastmesseinrichtung konzipiert ist, den Lastverlauf des Antriebsmotors auf den Lastwert und/oder Lastverlauf eines einzelnen Kettenglieds (14) aufzulösen, welche Auswerteeinrichtung (5) weiterhin konzipiert ist, ein Kettenglied (14) als defekt zu detektieren, wenn dessen Lastverhalten von einem Normverhalten abweicht.

2. Behälterreinigungsmaschine nach Anspruch 1, **dadurch gekennzeichnet, dass** die Auswerteeinrichtung (5) einen Mittelwertschaltung aufweist, die konzipiert ist, die über mehreren Kettengliedern (14) gemessenen Lastwerte und/oder Lastverläufe zu einem Lastmittelwert zu mitteln, und wobei die Auswerteeinrichtung (5) konzipiert ist, ein Kettenglied als defekt zu detektieren, wenn dessen Lastwert vom Lastmittelwert um wenigstens einen Schwellwert abweicht.

3. Behälterreinigungsmaschine nach Anspruch 1 oder 2, **dadurch gekennzeichnet, dass** die Auswerteeinrichtung (5) einen Analyseschaltung aufweist, die konzipiert ist, den Lastverlauf beim in Eingriff treten eines Kettenglieds (14) mit dem Zahnrad (12) über die Zeit vom Beginn des Eingriffs bis zum vollständigen Eingriff zu erfassen, und welche Auswerteeinrichtung (5) konzipiert ist, ein Kettenglied als defekt zu detektieren, wenn der Lastwert und/oder Lastverlauf von einem Normverhalten abweicht.

4. Behälterreinigungsmaschine nach einem der vorhergehenden Ansprüche, **dadurch gekennzeichnet, dass** die Auswerteeinrichtung (5) konzipiert ist, die Rotationsstellung und/oder Rotationsverlauf des Antriebsmotors zu erfassen.

5. Behälterreinigungsmaschine nach einem der vorhergehenden Ansprüche, **dadurch gekennzeichnet, dass** die Auswerteeinrichtung (5) konzipiert ist, die Position des defekten Kettenglieds (14) in der Transportkette (10) zu bestimmen.

6. Behälterreinigungsmaschine nach einem der vorhergehenden Ansprüche, **dadurch gekennzeichnet, dass** die Lastmesseinrichtung konzipiert ist, das Drehmoment der Antriebsmaschine und/oder den der Antriebmaschine zugeführten Strom zu messen, und/oder dass die Lastmesseinrichtung konzipiert ist, die Geschwindigkeit der Antriebmaschine und/oder der Transportkette (10) zu messen.

7. Behälterreinigungsmaschine nach einem der vorhergehenden Ansprüche, **dadurch gekennzeichnet, dass** die Auswerteeinrichtung (5) eine Korrelationsschaltung aufweist, die einen Speicher für die Anzahl der Motorumdrehungen aufweist, die für einen gesamten Kettendurchlauf benötigt werden, als auch einen Speicher für die aktuelle Position eines defekten Kettenglieds (14) in der Transportkette (10) vom Zeitpunkt der Erfassung des defekten Kettenglieds (14) an.

8. Behälterreinigungsmaschine nach einem der vorhergehenden Ansprüche, **dadurch gekennzeichnet, dass** sie mehrere Antriebsmotoren enthält, und dass die Auswerteeinrichtung (5) konzipiert ist, die an den jeweiligen Antriebsmotoren gemessen Lastsignale zur Verifizierung des defekten Kettenglieds (14) in Beziehung zu setzen.

9. Behälterreinigungsmaschine nach einem der vorhergehenden Ansprüche, **dadurch gekennzeichnet, dass** die Auswerteeinrichtung (5) einen Speicher für den Lastmittelwert über einen Kettendurchlauf und eine Vergleichsschaltung aufweist, die den gespeicherten Lastmittelwert mit einem aktuellen Lastmittelwert vergleicht, um daraus ein Wartungssignal abzuleiten.

10. Behälterreinigungsmaschine nach einem der vorhergehenden Ansprüche, **dadurch gekennzeichnet, dass** sie einen Wartungsbereich und/oder mindestens eine Wertungsöffnung (35) aufweist, und dass die Auswerteeinrichtung (5) und die Antriebssteuerung konzipiert sind, den Antriebsmotor derart anzutreiben, dass das defekte Kettenglied in den Wartungsbereich und/oder den Bereich einer Wartungsöffnung (35) gelangt.

11. Behälterreinigungsmaschine nach einem der vorhergehenden Ansprüche, **dadurch gekennzeichnet, dass** der mindestens eine Antriebsmotor ein von einem Frequenzwandler angetriebener Servomotor ist, und die Lastmesseinrichtung konzipiert ist, den dem Antriebsmotor vom Frequenzwandler zugeführten Strom zu messen.

12. Behälterreinigungsmaschine nach einem der vorherigen Ansprüche, **dadurch gekennzeichnet, dass** der Lastverlauf des mindestens einen Antriebsmotors erfassbar und auf den Lastwert und/oder Lastverlauf eines einzelnen Kettenglieds (14) auflösbar ist, wobei die Auswerteeinrichtung (5) weiterhin konzipiert ist, für eine Mehrzahl von Kettengliedern (14) einen für das jeweilige Kettenglied (14) charakteristischen Lastwert und/oder Lastverlauf als Kennwert zuzuordnen und unter Verwendung dieses Kennwertes zu jeder Zeit die Position des jeweiligen Kettengliedes (14) unabhängig von einem Defekt in der Behälterbehandlungsmaschine (1) bestimmbar ist.

13. Verfahren zum Betreiben einer Behälterreinigungsmaschine, die wenigstens eine Transportkette (10) mit zueinander beabstandete Behälteraufnahmen und wenigstens eine Reinigungskammer aufweist, die von der Transportkette (10) mit den Behälteraufnahmen durchlaufen wird, in welcher Reinigungskammer wenigstens eine Beaufschlagungsvorrichtung zum Beaufschlagen der in den Behälteraufnahmen gehaltenen Behältern mit einem Reinigungsmedium angeordnet sind,
welche Transportkette (10) mit wenigstens einem Antriebsmotor über ein Zahnrad (12) in Antriebsverbindung steht, wobei
- der Lastverlauf des Antriebsmotors beim Zusammenwirken der Transportkette (10) mit dem Zahnrad (12) über wenigstens einen Kettendurchlauf zusammen mit der korrespondierenden Rotationsstellung des Antriebsmotors gemessen wird,
**dadurch gekennzeichnet, dass**
- der Lastverlauf zeitlich auf die Lastwerte der einzelnen Kettenglieder beim Eingreifen in das Zahnrad (12) aufgelöst wird, und dass
- ein Kettenglied (14) als defekt detektiert wird, wenn sein Lastverhalten von einem Normverhalten abweicht.

14. Verfahren nach Anspruch 13, **dadurch gekennzeichnet, dass** aus den Lastwerten mehrerer Kettenglieder ein Lastmittelwert gebildet wird, und dass ein Kettenglied als defekt detektiert wird, wenn sein Lastwert um mindestens einen Schwellwert vom Lastmittelwert abweicht.

15. Verfahren nach Anspruch 13 oder 14, **dadurch gekennzeichnet, dass** der Lastverlauf beim In-Eingriff-Treten eines Kettenglieds (14) mit dem Zahnrad (12) über die Zeit vom Beginn des Eingriffs bis zum vollständigen Eingriff erfasst wird, und ein Kettenglied als defekt detektiert wird, wenn der Lastverlauf von einem Normverhalten abweicht, insbesondere degressiv ist.

16. Verfahren nach einem der Ansprüche 13 bis 15, **dadurch gekennzeichnet, dass** der Lastverlauf des Antriebsmotors beim Zusammenwirken der Transportkette (10) zusammen mit der korrespondierenden Rotationsstellung des Antriebsmotors gemessen wird.

17. Verfahren nach einem der Ansprüche 13 bis 16, **dadurch gekennzeichnet, dass** die Position eines defekten Kettenglieds (14) über die Anzahl der Antriebsmotorumdrehungen seit der Detektion des defekten Kettenglieds (14)/Gesamtanzahl der Antriebmotorumdrehungen über einen gesamten Kettendurchlauf bestimmt wird.

18. Verfahren nach einem der Ansprüche 13 bis 17, **dadurch gekennzeichnet, dass** der Lastmittelwert abgespeichert wird, und dass ein aktueller Lastmittelwert mit dem abgespeicherten Lastmittelwert verglichen wird, um eine Aussage über die Abnutzung der Kette zu erhalten.

19. Verfahren nach einem der Ansprüche 13 bis 18, **dadurch gekennzeichnet, dass** mehrere Antriebmotoren verwendet werden und eine Lastmessung an wenigstens zwei der Antriebmotoren erfolgt, und die an den unterschiedlichen Antriebsmotoren gemessenen Lastwerte zueinander in Beziehung gesetzt werden, um die Existenz und/oder die Position eines defekten Kettenglieds (14) zu verifizieren.

20. Verfahren nach Anspruch 19, **dadurch gekennzeichnet, dass** die Lastwerte aufeinander folgender Kettenglieder miteinander verglichen werden, um Aussagen über Fehler in bestimmten Komponenten der Transportkette (10) und/oder einer Kettenzuführung zum Zahnrad (12) zu erhalten.

21. Verfahren nach einem der Ansprüche 13 bis 20, **dadurch gekennzeichnet, dass** der Lastverlauf des mindestens einen Antriebsmotors erfasst wird und auf den Lastwert und/oder Lastverlauf eines einzelnen Kettenglieds (14) aufgelöst wird, wobei mittels der Auswerteeinrichtung (5) für eine Mehrzahl von Kettengliedern (14) ein für das jeweilige Kettenglied (14) charakteristischer Lastwert und/oder Lastverlauf als Kennwert zugeordnet wird und unter Verwendung dieses Kennwertes zu jeder Zeit die Position des jeweiligen Kettengliedes (14) unabhängig von einem Defekt in der Behälterbehandlungsmaschine (1) bestimmbar ist und darstellbar ist.

## Claims

1. Container-cleaning machine, comprising at least one circulating endless transport chain (10), which bears container receptacles spaced apart from one another, and at least one cleaning chamber, through which the transport chain (10) with the container receptacles passes, in which a cleaning chamber with at least one application device is arranged for applying a cleaning medium to the containers retained in the container receptacles, which transport chain (10) has a drive connection to at least one drive motor by means of a gear (12), wherein
the container cleaning machine has a load-measuring device for the drive motor, the output signals of which load-measuring device are fed to an evaluation device (5), which evaluation device (5) is designed to capture the load curve of the drive motor, measured by means of the load-measuring device, at least during one chain pass, **characterised in that** the load-measuring device is designed to resolve the load curve of the drive motor to the load value of a single chain link (14), which evaluation device (5) is further designed to detect a chain link (14) as defective if its load behaviour deviates from standard behaviour.

2. Container-cleaning machine according to claim 1, **characterised in that** the evaluation device (5) comprises a mean-value circuit, which is designed to mean the load values and/or load curves measured over several chain links (14) to a load mean-value, and wherein the evaluation device (5) is designed to detect a chain link as defective if its load behaviour deviates from the load mean-value by at least a threshold value.

3. Container-cleaning machine according to claim 1 or 2, **characterised in that** the evaluation device (5) comprises an analysis circuit, which is designed to detect the load curve at the coming into engagement of a chain link (14) with the gear wheel (12), over the time from the beginning of the engagement until the complete engagement, and this evaluation device (5) is designed to detect a chain link as defective if the load value and/or load curve deviates from standard behaviour.

4. Container-cleaning machine according to any one of the claims, **characterised in that** the evaluation device (5) is designed so as to detect the rotational position and/or rotation curve of the drive motor.

5. Container-cleaning machine according to any one of the claims, **characterised in that** the evaluation device (5) is designed so as to determine the position of the defective chain link (14) in the transport chain (10).

6. Container-cleaning machine according to any one of the claims, **characterised in that** the load- measuring device is designed to measure the torque moment of the drive machine and/or the current delivered to the drive machine, and/or that the load-measuring device is designed so as to measure the speed of the drive machine and/or of the transport chain (10).

7. Container-cleaning machine according to any one of the claims, **characterised in that** the evaluation device (5) comprises a correlation circuit, which has a memory store for the number of engine revolutions which are required for a complete chain pass, as well as a memory store for the current position of a defective chain link (14) in the transport chain (10) from the point of time of detection of the defective chain link (14) onwards.

8. Container-cleaning machine according to any one of the claims, **characterised in that** it contains several drive motors, and that the evaluation device (5) is designed to set in relationship the load signals measured at the respective drive motors in order to verify the defective chain link (14).

9. Container-cleaning machine according to any one of the claims, **characterised in that** the evaluation device (5) comprises a memory store for the load mean-value over one chain pass, and a comparison circuit, which compares the stored load mean-value with a current load mean-value in order to derive from this a maintenance signal.

10. Container-cleaning machine according to any one of the claims, **characterised in that** it comprises a maintenance area and/or at least one maintenance opening (35), and that the evaluation device (5) and the drive control are designed to drive the drive motor in such a way that the defective chain link moves into the maintenance area and/or into the area of a maintenance opening (35).

11. Container-cleaning machine according to any one of the claims, **characterised in that** the at least one drive motor is a servomotor driven by a frequency converter, and the load measuring device is designed to measure the current delivered to the drive motor by the frequency converter.

12. Container-cleaning machine according to any one of the claims, **characterised in that** the load curve of the at least one drive motor can be detected and resolved to the load value and/or load curve of an individual chain link (14), wherein the evaluation device (5) is further designed to assign, for a plurality of chain links (14), a load value and/or load curve characteristic for the respective chain link (14) as a characteristic value, and, by using this characteristic value, the position of the respective chain link (14) can be determined at any time, independently of any defect in the container handling [*sic*] machine (1).

13. Method for operating a container cleaning machine, which comprises at least one transport chain (10) with container receptacles spaced apart from one another, and at least one cleaning chamber, through which the transport chain (10) with the container receptacles passes, in which cleaning chamber at least one application device is arranged for applying a cleaning medium to the containers held in the container receptacles,
which transport chain (10) has a drive connection to at least one drive motor by means of a gear (12), wherein
- the load curve of the drive motor is measured at the interaction of the transport chain (10) with the gear (12), over at least one chain pass, together with the corresponding rotation setting of the drive motor,
**characterised in that**
- the load curve is resolved in respect of time to the load values of the individual chain links at their engagement into the gear (12), and that
- a chain link (14) is detected as defective if its load behaviour deviates from a standard behaviour.

14. Method according to claim 13, **characterised in that** a load mean-value is formed from the load values of several chain links, and that a chain link is detected as defective if its load value deviates from the load mean value by at least a threshold value.

15. Method according to claim 13 or 14, **characterised in that** the load curve is detected as a chain link (14) comes into engagement with the gear (12), over the time from the beginning of the engagement until the complete engagement, and a chain link is detected as defective if the load curve deviates from normal behaviour, in particular if it is degressive.

16. Method according to any one of claims 13 to 15, **characterised in that** the load curve of the drive motor is measured at the interaction of the transport chain (10), together with the corresponding rotational position of the drive motor.

17. Method according to any one of claims 13 to 16, **characterised in that** the position of a defective chain link (14) is determined over the number of drive motor revolutions since the detection of the defective chain link (14)/total number of drive motor revolutions over a total chain pass.

18. Method according to any one of claims 13 to 17, **characterised in that** the load mean value is stored, and that a current load mean value is compared with the stored load mean value, in order to obtain an indication of the wear of the chain.

19. Method according to any one of claims 13 to 18, **characterised in that** several drive motors are used, and a load measurement is carried out at least at two of the drive motors, and the load values measured at the different drive motors are set in relation to one another, in order to verify the existence and/or the position of a defective chain link (14).

20. Method according to claim 19, **characterised in that** the load values of chain links following one another in sequence are compared with one another, in order to obtain indications of faults in specific components of the transport chain (10) and/or of a chain feed to the gear (12).

21. Method according to any one of claims 13 to 20, **characterised in that** the load curve of the at least one drive motor is detected and resolved to the load value and/or load curve of an individual chain link (14), wherein, by means of the evaluation device (5), for a plurality of chain links (14), a load value and/or load curve which is characteristic for the respective chain link (14) is assigned as a characteristic value, and, making use of this characteristic value, the position of the respective chain link (14) can be determined and can be represented at any time, regardless of a defect in the container handling machine (1).

## Revendications

1. Machine de nettoyage de récipient, comprenant au moins une chaîne de transport sans fin (10) rotative qui porte des logements de récipient espacés les uns des autres, et au moins une chambre de nettoyage qui est traversée par la chaîne de transport (10) avec les logements de récipient, dans laquelle chambre de nettoyage au moins un dispositif d'alimentation est agencé pour l'alimentation des récipients contenus dans les logements de récipient en un fluide de nettoyage, laquelle chaîne de transport (10) est en liaison d'entraînement avec au moins un moteur d'entraînement par le biais d'une roue dentée (12), dans laquelle
la machine de nettoyage de récipient présente un dispositif de mesure de charge pour le moteur d'entraînement, dont les signaux de sortie sont fournis à un dispositif d'évaluation (5), lequel dispositif d'évaluation (5) est conçu afin de détecter la courbe de charge mesurée par le biais du dispositif de mesure de charge du moteur d'entraînement au moins pendant un passage de chaîne, **caractérisée en ce que** le dispositif de mesure de charge est conçu afin de définir la courbe de charge du moteur d'entraînement sur la valeur de charge et/ou la courbe de charge d'un maillon de chaîne (14) individuel, lequel dispositif d'évaluation (5) est en outre conçu afin de détecter comme défectueux un maillon de chaîne (14) lorsque son comportement de charge diverge d'un comportement normé.

2. Machine de nettoyage de récipient selon la revendication 1, **caractérisée en ce que** le dispositif d'évaluation (5) présente un circuit de valeur moyenne qui est conçu afin de calculer une valeur moyenne de charge des valeurs de charge et/ou courbes de charge mesurées par le biais de plusieurs maillons de chaîne (14), et dans laquelle le dispositif d'évaluation (5) est conçu afin de détecter comme défectueux un maillon de chaîne, lorsque sa valeur de charge diverge de la valeur moyenne de charge d'au moins une valeur seuil.

3. Machine de nettoyage de récipient selon la revendication 1 ou 2, **caractérisée en ce que** le dispositif d'évaluation (5) présente un circuit d'analyse qui est conçu afin de détecter la courbe de charge lors de la mise en prise d'un maillon de chaîne (14) avec la roue dentée (12) au cours de la période du début de la prise jusqu'à la prise complète, et lequel dispositif d'évaluation (5) est conçu afin de détecter comme défectueux un maillon de chaîne lorsque la valeur de charge et/ou la courbe de charge diverge d'un comportement normé.

4. Machine de nettoyage de récipient selon l'une quelconque des revendications précédentes, **caractérisée en ce que** le dispositif d'évaluation (5) est conçu afin de détecter la position de rotation et/ou la courbe de rotation du moteur d'entraînement.

5. Machine de nettoyage de récipient selon l'une quelconque des revendications précédentes, **caractérisée en ce que** le dispositif d'évaluation (5) est conçu afin de déterminer la position du maillon de chaîne (14) défectueux dans la chaîne de transport (10).

6. Machine de nettoyage de récipient selon l'une quelconque des revendications précédentes, **caractérisée en ce que** le dispositif de mesure de charge est conçu afin de mesurer le couple de la machine d'entraînement et/ou le courant fourni à la machine d'entraînement, et/ou que le dispositif de mesure de charge est conçu afin de mesurer la vitesse de la machine d'entraînement et/ou de la chaîne de transport (10).

7. Machine de nettoyage de récipient selon l'une quelconque des revendications précédentes, **caractérisée en ce que** le dispositif d'évaluation (5) présente un circuit de corrélation qui présente une mémoire pour le nombre de rotations de moteur qui sont nécessaires pour un passage de chaîne entier, ainsi qu'une mémoire pour la position actuelle d'un maillon de chaîne (14) défectueux dans la chaîne de transport (10) depuis le moment de la détection du maillon de chaîne (14) défectueux.

8. Machine de nettoyage de récipient selon l'une quelconque des revendications précédentes, **caractérisée en ce qu'**elle contient plusieurs moteurs d'entraînement, et que le dispositif d'évaluation (5) est conçu afin de mettre en rapport des signaux de charge mesurés au niveau des moteurs d'entraînement concernés pour la vérification du maillon de chaîne (14) défectueux.

9. Machine de nettoyage de récipient selon l'une quelconque des revendications précédentes, **caractérisée en ce que** le dispositif d'évaluation (5) présente une mémoire pour la valeur moyenne de charge sur un passage de chaîne et un circuit de comparaison qui compare la valeur moyenne de charge enregistrée avec une valeur moyenne de charge actuelle afin de dériver à partir de celle-ci un signal de maintenance.

10. Machine de nettoyage de récipient selon l'une quelconque des revendications précédentes, **caractérisée en ce qu'**elle présente une zone de maintenance et/ou au moins une ouverture de maintenance (35), et que le dispositif d'évaluation (5) et la commande d'entraînement sont conçus afin d'entrer le moteur d'entraînement de telle manière que le maillon de chaîne défectueux parvienne dans la zone de maintenance et/ou la zone d'une ouverture de maintenance (35).

11. Machine de nettoyage de récipient selon l'une quelconque des revendications précédentes, **caractérisée en ce que** l'au moins un moteur d'entraînement est un servomoteur entraîné par un convertisseur de fréquence, et le dispositif de mesure de charge est conçu afin de mesurer le courant fourni au moteur d'entraînement par le convertisseur de fréquence.

12. Machine de nettoyage de récipient selon l'une quelconque des revendications précédentes, **caractérisée en ce que** la courbe de charge de l'au moins un moteur d'entraînement peut être détectée et peut être définie sur la valeur de charge et/ou la courbe de charge d'un maillon de chaîne (14) individuel, dans laquelle le dispositif d'évaluation (5) est en outre conçu afin d'associer en tant que valeur caractéristique pour une pluralité de maillons de chaîne (14) une valeur de charge et/ou courbe de charge caractéristique pour le maillon de chaîne (14) concerné et en utilisant cette valeur caractéristique, à chaque moment la position du maillon de chaîne (14) concerné peut être déterminée indépendamment d'un défaut dans la machine de traitement de récipient (1).

13. Procédé de fonctionnement d'une machine de nettoyage de récipient qui présente au moins une chaîne de transport (10) avec des logements de récipient espacés les uns des autres et au moins une chambre de nettoyage qui est traversée par la chaîne de transport (10) avec les logements de récipient, dans laquelle chambre de nettoyage au moins un dispositif d'alimentation est agencé pour l'alimentation des récipients contenus dans les logements de récipient en un fluide de nettoyage,
laquelle chaîne de transport (10) est en liaison d'entraînement avec au moins un moteur d'entraînement par le biais d'une roue dentée (12), dans lequel
- la courbe de charge du moteur d'entraînement est mesurée lors de la coopération de la chaîne de transport (10) avec la roue dentée (12) par le biais d'au moins un passage de chaîne conjointement avec la position de rotation correspondante du moteur d'entraînement,
**caractérisé en ce que**
- la courbe de charge est temporellement définie sur les valeurs de charge des maillons de chaîne individuels lors de la prise dans la roue dentée (12), et que
- un maillon de chaîne (14) est détecté comme défectueux lorsque son comportement de charge diverge d'un comportement normé.

14. Procédé selon la revendication 13, **caractérisé en ce qu'**à partir des valeurs de charge de plusieurs maillons de chaîne une valeur moyenne de charge est formée, et qu'un maillon de chaîne est détecté comme défectueux lorsque sa valeur de charge diverge d'au moins une valeur seuil de la valeur moyenne de charge.

15. Procédé selon la revendication 13 ou 14, **caractérisé en ce que** la courbe de charge est détectée lors de la mise en prise d'un maillon de chaîne (14) avec la roue dentée (12) au cours de la période du début de la prise jusqu'à la prise complète, et un maillon de chaîne est détecté comme défectueux lorsque la courbe de charge diverge d'un comportement normé, en particulier est dégressive.

16. Procédé selon l'une quelconque des revendications 13 à 15, **caractérisé en ce que** la courbe de charge du moteur d'entraînement est mesurée lors de la coopération de la chaîne de transport (10) conjointement avec la position de rotation correspondante du moteur d'entraînement.

17. Procédé selon l'une quelconque des revendications 13 à 16, **caractérisé en ce que** la position d'un maillon de chaîne (14) défectueux est déterminée par le biais du nombre de rotations de moteur d'entraînement depuis la détection du maillon de chaîne (14) défectueux/nombre entier de rotations de moteur d'entraînement sur un passage de chaîne entier.

18. Procédé selon l'une quelconque des revendications 13 à 17, **caractérisé en ce que** la valeur moyenne de charge est enregistrée, et qu'une valeur moyenne de charge actuelle est comparée avec la valeur moyenne de charge enregistrée afin d'obtenir une information sur l'usure de la chaîne.

19. Procédé selon l'une quelconque des revendications 13 à 18, **caractérisé en ce que** plusieurs moteurs d'entraînement sont utilisés et une mesure de charge est effectuée au niveau d'au moins deux des moteurs d'entraînement, et les valeurs de charge mesurées au niveau des différents moteurs d'entraînement sont mises en rapport les unes avec les autres afin de vérifier l'existence et/ou la position d'un maillon de chaîne (14) défectueux.

20. Procédé selon la revendication 19, **caractérisé en ce que** les valeurs de charge de maillons de chaîne se suivant sont comparées entre elles afin d'obtenir des informations sur des erreurs dans des composants déterminés de la chaîne de transport (10) et/ou une fourniture de chaîne à la roue dentée (12).

21. Procédé selon l'une quelconque des revendications 13 à 20, **caractérisé en ce que** la courbe de charge d'au moins un moteur d'entraînement est détectée et est définie sur la valeur de charge et/ou la courbe de charge d'un maillon de chaîne (14) individuel, dans lequel au moyen du dispositif d'évaluation (5) pour une pluralité de maillons de chaîne (14) une valeur de charge et/ou courbe de charge caractéristique pour le maillon de chaîne (14) concerné est associée en tant que valeur caractéristique et en utilisant cette valeur caractéristique à tout moment la position du maillon de chaîne (14) concerné peut être déterminée et représentée indépendamment d'un défaut dans la machine de traitement de récipient (1).
